Europäisches Patentamt

European Patent Office

Office européen des brevets

(11) Veröffentlichungsnummer : **0 091 640**
B1

# EUROPÄISCHE PATENTSCHRIFT

(45) Veröffentlichungstag der Patentschrift :
21.01.87

(21) Anmeldenummer : 83103305.5

(22) Anmeldetag : 05.04.83

(51) Int. Cl.⁴ : **C 01 G 49/00, C 01 G 51/00**

(54) Verfahren zur Herstellung von Ferriten aus Eisen(II)-Sulfat.

(30) Priorität : 14.04.82 DE 3213683

(43) Veröffentlichungstag der Anmeldung :
19.10.83 Patentblatt 83/42

(45) Bekanntmachung des Hinweises auf die Patenterteilung : 21.01.87 Patentblatt 87/04

(84) Benannte Vertragsstaaten :
DE FR GB NL

(56) Entgegenhaltungen :
EP-A- 0 072 437
FR-A- 2 242 347
US-A- 3 832 455
CHEMICAL ABSTRACTS, Band 74, Nr. 24, 14. Juni
1971, Seite 162, Nr. 128277r, Columbus, Ohio, USA

(73) Patentinhaber : BASF Aktiengesellschaft
Carl-Bosch-Strasse 38
D-6700 Ludwigshafen (DE)

(72) Erfinder : Hibst, Hartmut, Dr.
Sternstrasse 215
D-6700 Ludwigshafen (DE)

EP 0 091 640 B1

## Beschreibung

Die Erfindung betrifft ein Verfahren zur Herstellung von Ferriten vom M-Typ der Formel $AFe_{12}O_{19}$, vom $Me_2Y$-Typ der Formel $A_2Me_2Fe_{12}O_{22}$ oder vom Spinell-Typ der Formel $MeFe_2O_4$, wobei A für Ba, Sr, Pb und/oder Ca und Me für Zn, Mn, Co, Cu, Fe(II) und/oder 1/2 (Li(I) + Fe(III)) stehen.

Hexagonale Ferritpulver für die Herstellung von Hartferritmagneten sowie von weitgehend fälschungssicheren magnetischen Aufzeichnungen werden üblicherweise nach dem keramischen Verfahren hergestellt. Dazu werden Bariumcarbonat bzw. Strontiumcarbonat und Eisenoxid in dem Verhältnis, das der chemischen Formel des späteren Ferrits entspricht, gemischt und diese Mischung einer Wärmebehandlung, dem sogenannten Vorsintern, bei Temperaturen zwischen 1 100 und 1 300 °C unterworfen. Beim Vorsintern bildet sich der magnetische Hexaferrit. Die entstandenen versinterten Konglomerate aus Kristalliten werden anschließend meist unter Zusatz von Wasser zu einem Pulver, dessen Teilchengröße rund 1 µm beträgt, gemahlen. Durch das Mahlen entstehen Kristallbaufehler in den Teilchen, die eine Erniedrigung der Koerzitivität zur Folge haben. So hergestellte Ferritpulver weisen im allgemeinen eine recht gute spezifische remanente Magnetisierung auf, die Magnetisierungskoerzitivfeldstärke $_jH_c$ liegt aber mit etwa 200 kA/m vor dem Mahlen und kleiner 150 kA/m nach dem Mahlen recht niedrig. Diese durch das Mahlen hervorgerufenen Kristallbaudefekte lassen sich durch ein Tempern nach dem Mahlen oder durch einen Sinterprozeß nur zum Teil wieder ausheilen. Deshalb zeigen die aus gemahlenem hartmagnetischem Bariumferritpulver hergestellten Magnete, wie sie in der Technik heute benutzt werden, $_jH_c$-Werte von nur 280 bis 320 kA/m. Außerdem weisen die gemahlenen Ferritpulver ein breites Teilchengrößenspektrum auf. Die Darstellung von Ferriten mit Spinellstruktur wie z. B. Manganzinkferrit verläuft in gleicher Weise.

Weiterhin sind zur Herstellung der genannten Ferrite Fluxverfahren bekannt, bei denen Flußmittel zur Förderung der Reaktion zwischen den einzelnen Metalloxiden eingesetzt werden, wie z. B. $B_2O_3$, Alkaliborate, Alkaliferrite, $Bi_2O_3$, Molybdate, Alkalihalogenide und -sulfate. So wird nach der US-A-3 793 443 Bariumferrit durch Erhitzen eines $BaCO_3$-FeOOH-NaCl-KCl-Gemenges dargestellt. Dabei wird es als wichtig angesehen, von FeOOH als Eisenkomponente auszugehen, um die Ferritbildungsreaktion in Gegenwart von *in situ* erzeugtem $H_2O$ durchzuführen. Außerdem wird eine vollständige Ferritbildung nur bei hohen Temperaturen, weit oberhalb des Schmelzpunktes der zugegebenen Alkalichloride beobachtet. Tiefere Temperaturen führen zu geringen Ba-Ferritausbeuten. Das Verfahren bringt gegenüber der keramischen Methode keine Verbesserung in der Koerzitivkraft. Nach dem Verfahren der US-A-

38 10 973 wird eine Suspension von Eisen(III)-Oxidhydrat in einer Alkalichloridlösung mit $BaCO_3$-Pulver versetzt und dann sprühgetrocknet und bei 1 000 bis 1 050 °C getempert. In der DE-A-21 43 793 wird ein Verfahren zur Herstellung von Bariumferrit beschrieben, bei dem ein $BaCO_3$-$Fe_2O_3$-$Na_2SO_4$-$K_2SO_4$-Gemenge auf 950 °C erhitzt wird. Weiterhin ist sehr hochkoerzitives und feinteiliges Bariumferritpigment durch Tempern von NaCl- oder $Na_2SO_4$-haltigen sprühgetrockneten Mischfällungen zugänglich (DE-A-30 42 959, DE-A-31 32 677). Analoge Verfahren beschreiben die Darstellung von hexagonalem $Me_2Y$-Ferritpulver (DE-A-31 32 680) und Ferritpulver mit Spinellstruktur (DE-A-31 32 684). Weiterhin ist $BaFe_{12}O_{19}$ (DE-A-31 32 678), $Me_2Y$-Ferrit (DE-A-31 32 681) und Ferritpulver vom Spinelltyp (DE-A-31 32 683) durch Temperung von vermahlenen $FeCl_3$-, $Na_2CO_3$- und/oder $K_2CO_3$-haltigen Salzmengen zugänglich.

Eisen(II)-Sulfathydrat fällt bei einer Reihe von chemischen Verfahren in großen Mengen als billiges Abfallprodukt an, so z. B. bei der Herstellung von $TiO_2$ aus Ilmenit nach dem Sulfatverfahren oder beim Beizen von Eisenblechen. Weiterhin ist $BaSO_4$ als Mineral (Schwerspat, Baryt) weit verbreitet. $SrSO_4$ findet sich in der Natur als Cölestin. Dieser bildet das billige technische Ausgangsmaterial für die meisten Strontiumverbindungen.

Es bestand daher die Aufgabe, Eisen(II)-Sulfathydrat auf einfachem und wirtschaftlichem Wege in hochwertige Ferritpulver insbesondere vom hexagonalen M- und $Me_2Y$-Typ und vom kubischen Spinelltyp zu überführen. Außerdem war es Aufgabe der Erfindung für die Herstellung der hexagonalen Ferrite direkt von den Mineralien Schwerspat bzw. Baryt oder von Cölestin auszugehen. Die erhaltenen Ferritpulver sollten sich vor allem durch ein enges Teilchengrößenspektrum und insbesondere im Falle von Bariumferrit (M-Typ) durch einen hohen $H_c$-Wert auszeichnen. Außerdem wurde für alle Ferritpulver eine gute Dispergierbarkeit in organische Bindemittel angestrebt.

Es wurde nun überraschenderweise gefunden, daß sich Ferrite auf einfachem Wege mit den aufgabengemäß geforderten Eigenschaften herstellen lassen, wenn Eisen(II)-Sulfathydrat unter einem Druck von kleiner 0,8 bar bei Temperaturen zwischen 50 und 350 °C entwässert, anschließend in einem oxidierenden Gasstrom bei Temperaturen zwischen 180° und 600 °C getempert, das resultierende Produkt mit Natrium- und/oder Kaliumkarbonat sowie Salzen und/oder Oxiden der weiteren neben Fe(III) für die jeweilige Ferritzusammensetzung erforderlichen Kationen vermischt, das erhaltene Gemenge auf eine Temperatur zwischen 700 und 1 200 °C erhitzt und dann der entstandene Ferrit durch Auslaugen mit Wasser isoliert wird.

Besonders vorteilhaft ist es, wenn das Eisen(II)-sulfathydrat unter einem Druck von kleiner 0,1 bar solange auf eine Temperatur vorzugsweise zwischen 70 und 250 °C erhitzt wird bis mehr als 50 %, insbesondere mehr als 80 % des Hydratwassers entfernt sind. Bei der sich daran anschließenden Temperung, bei einer Temperatur zwischen 180 und 400 °C in einem oxidierenden Gasstrom, üblicherweise im Luftstrom wird dann das zweiwertige Eisen zu mehr als 80 % in dreiwertiges überführt.

Bei der Durchführung des erfindungsgemäßen Verfahrens hat es sich als zweckmäßig erwiesen, die Entwässerung des Eisen(II)-Sulfathydrates in einer kontinuierlich evakuierten Apparatur mit ansteigender Temperatur vorzunehmen. Auch die anschließende Oxidation im Luftstrom wird vorteilhafterweise bei ansteigender Temperatur durchgeführt.

Bei den einzelnen Komponenten für das Reaktionsgemenge wird neben $Na_2CO_3$ und/oder $K_2CO_3$ und dem entwässerten und oxidierten Eisensulfat hinsichtlich der Salze und/oder Oxide der weiteren Kationen vorzugsweise das entsprechende Oxid, Carbonat, Chlorid oder Sulfat ausgewählt. Hexagonale Ferrite vom M-Typ haben die ideale Zusammensetzung $AFe_{12}O_{19}$, wobei A für Ba, Sr, Pb und/oder Ca steht. Außerdem ist eine außerordentliche Vielfalt von Substitutionsmöglichkeiten mit weiteren Kationen bekannt. Von besonderem Interesse ist, daß dieses Verfahren bei der Herstellung von Ba- und Sr-Ferrit den Einsatz der billigen Mineralien Schwerspat bzw. Baryt ($BaSO_4$) und Cölestin ($SrSO_4$) ermöglicht. Die Ferrite vom Spinelltyp besitzen die ideale Zusammensetzung $MeFe_2O_4$, wobei Me beispielhaft für die zweiwertigen Kationen von Zn, Mn, Co, Cu, Fe oder für mehrere Kationen mit unterschiedlicher Wertigkeit wie z. B. Li(I) und Fe(III) steht. Den hexagonalen Ferriten vom $Me_2Y$-Typ kommt die ideale Zusammensetzung $A_2Me_2Fe_{12}O_{22}$ zu, wobei A und Me die vorgenannte Bedeutung hat.

Die Molmassenverhältnisse im Reaktionsgemenge sind so gewählt, daß das Verhältnis der Summe der Mole Natrium und der Mole Kalium zu der Summe der doppelten Molzahl Sulfat und der Mole Chlorid 0,8 bis 1,4 beträgt. Außerdem hat es sich im Falle der Darstellung der hexagonalen Ferrite als zweckmäßig erwiesen, die Erdalkalikomponente bezogen auf die stöchiometrische ideale Zusammensetzung im Überschuß einzusetzen.

Weiterhin werden zur Durchführung des erfindungsgemäßen Verfahrens die einzelnen Komponenten in Pulverform in bekannter Weise miteinander vermischt und zweckmäßigerweise in einem Mahlaggregat vermahlen, um eine homogene Verteilung der einzelnen Substanzen untereinander zu erreichen. Das intensiv gemischte und vermahlende Gemenge wird anschließend auf 700 bis 1 200 °C aufgeheizt und bei dieser Temperatur 0,2 bis 3 Stunden getempert. Nach dem Abkühlen fällt ein Gemenge aus Ferrit, Alkalisulfat und ggf. Alkalichlorid an, dessen Salzanteil anschließend mit Wasser herausgelöst wird.

Das erfindungsgemäße Verfahren unterscheidet sich von den bekannten Verfahren, bei denen im allgemeinen von $\alpha$-$Fe_2O_3$ als Eisen(III)-Komponente ausgegangen wird, vor allem dadurch, daß erst bei der Oxidation oder der eigentlichen Reaktion der Ausgangskomponente in situ ein äußerst feinteiliges und reaktives Eisen(III)-Oxid entsteht. Gleichzeitig bildet sich als Nebenprodukt in feiner Verteilung Natriumsulfat und/oder Kaliumsulfat. Werden Chloride bei der Reaktion eingesetzt, fällt zusätzlich Alkalichlorid an. Die Salze schmelzen bei niedrigen Temperaturen, im Falle der eutektischen Zusammensetzung von 80 Mol-% $Na_2SO_4$ und 20 Mol-% $K_2SO_4$ schon bei 830 °C und bildet eine katalytische flüssige Phase für den schnellen Transport der Reaktionskomponenten. Zum anderen verhindert der anfallende Salzanteil ein Versintern der entstehenden Ferritkristalle.

Aufgrund des erfindungsgemäßen Verfahrens lassen sich Ferrite mit hexagonalem Kristallsystem vom M- und $Me_2Y$-Typ und mit kubischem Kristallsystem vom Spinelltyp mit engem Teilchenspektrum als unversinterte Pulver gewinnen, ohne daß Mahlprozesse erforderlich sind, die in nachteiliger Weise zu einem breiten Teilchengrößenspektrum und zu defektreichen Partikeln führen. Die hexagonalen Ferrite bestehen aus sechseckigen Plättchen, die je nach Reaktionsbedingungen einen mittleren Durchmesser von 0,2 bis 2,0 μm besitzen. Die Ferritpartikel vom Spinelltyp sind oktaederförmig ausgebildet und besitzen, abhängig von den Reaktionsbedingungen und der chemischen Zusammensetzung des Spinells einen Durchmesser von 0,1 bis 1,0 μm. Da die Ferritpartikel bei der Darstellung monodispers und unversintert aus der Salzschmelze auskristallisieren, resultiert für die erhaltenen Pulver eine gute Dispergierbarkeit in organische Bindemittel wie Lacke und Kunststoffe.

Außerdem zeichnet sich das Verfahren durch die Verwendung des billigen Abfallprodukts von Eisen(II)-Sulfathydrat durch eine hohe Wirtschaftlichkeit aus.

Die Erfindung sei anhand folgender Beispiele näher erläutert. Die magnetischen Eigenschaften der resultierenden Ferrite wurden in einem Magnetfeld von 800 kA/m bestimmt.

Beispiel 1

200 g $FeSO_4 \cdot 7 H_2O$ werden in einem Vakuumtrockenschrank im Wasserstrahlvakuum nacheinander 1 Tag bei 80 °C, 1 Tag bei 120 °C und 1 Tag bei 180 °C entwässert. Das erhaltene Produkt wird anschließend in einem Drehkugelofen im Luftstrom (100 l/h) nacheinander 0,5 h bei 215 °C, 0,5 h bei 250 °C und 1 h bei 350 °C oxidiert. Das erhaltene hellbraune, beinahe vollständig oxidierte Produkt A enthält 32,5 % Fe(III), 0,2 Gew.-% Fe(II) und 57,1 Gew.-% Sulfat.

100 g des so erhaltenen Produktes A werden in einer Fliehkraftkugelmühle mit 11,01 g $BaCO_3$, 50,37 g $Na_2CO_3$ und 16,42 g $K_2CO_3$ intensiv vermahlen. Das Gemenge wird 1 h lang bei 900 °C in einer Pt-Schale an Luft getempert. Der nach dem Abkühlen erhaltene Schmelzkuchen wird mit Wasser behandelt, abfiltriert und salzfrei ausgewaschen. Nach dem Trocknen bei 100 °C liegt ein Bariumferritpulver vor mit folgenden Eigenschaften : $H_c = 309$ KA/m, $M_r/\nu = 43$ nTm$^3$/g, $S_{N_2} = 4,3$ m$^2$/g. Der mittlere Plättchendurchmesser beträgt 0,8 µm.

Beispiel 2

100 g des Oxidationsproduktes A aus Beispiel 1 werden in einer Fliehkraftkugelmühle mit 13,02 g BaSO$_4$, 55,10 g NaCO$_3$ und 17,96 g K$_2$CO$_3$ intensiv vermahlen. Das Gemenge wird 1 h lang bei 900 °C in einer Pt-Schale an Luft getempert. Der nach dem Abkühlen erhaltene Schmelzkuchen wird mit Wasser behandelt, abfiltriert und salzfrei ausgewaschen. Nach dem Trocknen bei 100 °C liegt ein Bariumferritpulver vor mit folgenden Eigenschaften : $H_c = 306$ kA/m, $M_r/\xi = 43$ nTm$^3$/g, $S_{N_2} = 3,9$ m$^2$/g. Der mittlere Plättchendurchmesser beträgt 0,8 µm.

Beispiel 3

102,8 g des Oxidationsproduktes A aus Beispiel 1 werden in einer Fliehkraftkugelmühle mit 21,2 g BaCO$_3$, 12,6 g Zinkhydroxidcarbonat (mit 56,0 Gew.-% Zn), 50,9 g Na$_2$CO$_3$ und 16,6 g K$_2$CO$_3$ intensiv vermahlen. Das Gemenge wird 1 h lang bei 980 °C in einer Platinschale an Luft getempert. Der nach dem Abkühlen erhaltene Schmelzkuchen wird mit Wasser behandelt, abfiltriert und salzfrei ausgewaschen. Nach dem Trocknen bei 100 °C liegt ein Ba$_2$Zn$_2$Fe$_{12}$O$_{22}$-Pulver (Zn$_2$Y) vor mit folgenden Eigenschaften : $H_c = 0,3$ kA/m, $M_s/\zeta = 32$ nTm$^3$/g, $S_{N_2} = 4,0$ m$^2$/g. Der mittlere Plättchendurchmesser beträgt 2 µm.

Beispiel 4

89,1 g des Oxidationsproduktes A aus Beispiel 1 werden in einer Fliehkraftkugelmühle mit 11,7 g Zinkhydroxidcarbonat (mit 56,0 Gew.-% Zn), 17,5 g Manganhydroxidcarbonat (mit 44,0 Gew.-% Mn), 44,1 g Na$_2$CO$_3$ und 14,4 g K$_2$CO$_3$ intensiv vermahlen. Das Gemenge wird 1 h lang bei 1 100 °C in einer Platinschale an der Luft getempert. Der nach dem Abkühlen erhaltene Schmelzkuchen wird mit Wasser behandelt, abfiltriert und salzfrei ausgewaschen. Nach dem Trocknen bei 100 °C liegt ein einphasiges Manganzinkferritpulver vor mit folgenden Eigenschaften : $H_c = 2,5$ kA/m, $M_s/\zeta = 75$ nTm$^3$/g $S_{N_2} = 7,1$ m$^2$/g. Der mittlere Teilchendurchmesser beträgt 0,1 µm.

**Patentansprüche**

1. Verfahren zur Herstellung von Ferriten vom M-Typ der Formel AFe$_{12}$O$_{19}$, vom Me$_2$Y-Typ der Formel A$_2$Me$_2$Fe$_{12}$O$_{22}$ oder vom Spinell-Typ der Formel MeFe$_2$O$_4$, wobei A für Ba, Sr, Pb und/oder Ca und Me für Zn, Mn, Co, Cu, Fe(II) und/oder 1/2 (Li(I) + Fe(III)) stehen, unter Einsatz von entwässertem Eisen(II) sulfat als Ausgangsmaterial, dadurch gekennzeichnet, daß Eisen(II)-Sulfathydrat unter einem Druck von kleiner 0,8 bar bei Temperaturen zwischen 50 und 350 °C entwässert, anschließend in einem oxidierenden Gasstrom bei Temperaturen zwischen 180 und 600 °C getempert, das resultierende Produkt mit Natrium- und/oder Kaliumcarbonat sowie Salzen und/oder Oxiden der weiteren neben Fe(III) für die jeweilige Ferritzusammensetzung erforderlichen A- und/oder Me-Kationen vermischt, das erhaltene Gemenge auf eine Temperatur zwischen 700 und 1 200 °C erhitzt und dann der entstandene Ferrit durch Auslaugen mit Wasser isoliert wird.

2. Verfahren nach Anspruch 1, dadurch gekennzeichnet, daß das Eisen(II)-Sulfathydrat bei ansteigender Temperatur so lange entwässert wird, bis mehr als 50 % des Hydratwassers entfernt sind.

3. Verfahren nach Anspruch 1, dadurch gekennzeichnet, daß das entwässerte Eisen(II)-Sulfathydrat in einem Luftstrom bei ansteigender Temperatur so lange oxidiert wird, bis mehr als 80 % des zweiwertigen in dreiwertiges Eisen überführt ist.

4. Verfahren nach Anspruch 1, dadurch gekennzeichnet, daß die A- und/oder Me-Kationen, welche neben dem Fe(III)-Kation für die Zusammensetzung des jeweiligen Ferrits erforderlich sind, als Sulfate, Chloride oder Carbonate eingesetzt werden.

**Claims**

1. A process for the preparation of an M-type ferrite of the formula AFe$_{12}$O$_{19}$, an Me$_2$Y-type ferrite of the formula A$_2$Me$_2$Fe$_{12}$O$_{22}$ or a spinel-type ferrite of the formula MeFe$_2$O$_4$, where A is Ba, Sr, Pb and/or Ca and Me is Zn, Mn, Co, Cu, Fe(II) and/or 1/2(Li(I) + Fe(III)), using dehydrated iron(II) sulfate as starting material, wherein iron(II) sulfate hydrate is dehydrated under a pressure of less than 0.8 bar at from 50 to 350 °C and then heated in an oxidizing gas stream at from 180 to 600 °C, the resulting product is mixed with sodium carbonate and/or potassium carbonate and salts and/or oxides of other A and/or Me cations required in addition to Fe(III) for the particular ferrite composition, the mixture obtained is heated at from 700 to 1 200 °C and the resulting ferrite is then isolated by leaching with water.

2. A process as claimed in claim 1, wherein the iron(II) sulfate hydrate is dehydrated until more than 50 % of the water of hydration has been removed, the temperature being progressively increased during this procedure.

3. A process as claimed in claim 1, wherein the dehydrated iron(II) sulfate hydrate is oxidized in a stream of air until more than 80 % of the divalent iron has been converted into trivalent iron, the temperature being progressively increased during this procedure.

4. A process as claimed in claim 1, wherein the A and/or Me cations, which are required in addition to the Fe(III) cation for the composition of the particular ferrite, are used in the form of sulfates, chlorides or carbonates.

## Revendications

1. Procédé de préparation de ferrites de type M de formule $AFe_{12}O_{19}$, de type $Me_2Y$ de formule $A_2Me_2Fe_{12}O_{22}$ ou de type spinelle de formule $MeFe_2O_4$, A étant mis pour Ba, Sr, Pb et/ou Ca et Me pour Zn, Mn, Co, Cu, Fe(II) et/ou 1/2 (Li(I) + Fe(III)), avec introduction de sulfate de fer(II) déshydraté comme matière de départ, caractérisé par le fait que l'on déshydrate l'hydrate de sulfate de fer(II) à des températures comprises entre 50 et 350 °C, sous une pression inférieure à 0,8 bar, on met ensuite en équilibre de température à des températures comprises entre 180 et 600 °C dans un courant gazeux oxydant, on mélange le produit résultant avec du carbonate de sodium et/ou potassium, ainsi que des sels et/ou oxydes des autres cations A et/ou Me nécessaires, en plus de Fe(III), pour chaque composition de ferrite, on chauffe le mélange obtenu à une température comprise entre 700 et 1 200 °C, puis on isole le ferrite obtenu par lessivage à l'eau.

2. Procédé selon la revendication 1, caractérisé par le fait que l'hydrate de sulfate de fer(II) est déshydraté, à température croissante jusqu'à ce que plus de 50 % de l'eau d'hydrate soient éliminés.

3. Procédé selon la revendication 1, caractérisé par le fait que l'hydrate de sulfate de fer(II) déshydraté est oxydé dans un courant d'air, à température croissante jusqu'à ce que plus de 80 % du fer bivalent soit transformé en fer trivalent.

4. Procédé selon la revendication 1, caractérisé par le fait que les cations A et/ou Me, qui sont nécessaires, en plus d'un cation de Fe(III), pour la composition du ferrite, sont introduits sous forme de sulfates, chlorures ou carbonates.